# FASCICULE DE BREVET EUROPEEN

(11) **EP 0 444 994 B1**
(45) Date de publication et mention de la délivrance du brevet: **15.06.1994**
(21) Numéro de dépôt: 91400387.6
(22) Date de dépôt: 14.02.1991
(51) Int. Cl.: B62D 1/18

(54) **Colonne de direction réglable**
Verstellbare Lenksäule
Adjustable steering column

(30) Priorité: 28.02.1990 FR 9002528
(43) Date de publication de la demande: 04.09.1991
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Mouhot, Frédéric, F-25420 Voujeaucourt (FR); Barnabe, Jean Pierre, F-25700 Valentigney (FR)
(74) Mandataire: Habasque, Etienne Joel Jean-François

(56) Documents cités:
- EP-A- 0 315 823
- WO-A-88/10205
- US-A- 4 691 587

## Description

L'amélioration du confort de conduite des véhicules automobiles est un souci constant pour les constructeurs et les pousse à munir ces véhicules d'une colonne de direction réglable permettant d'adapter la position du volant de direction à la morphologie du conducteur.

Cette adaptation peut s'effectuer dans le plan vertical et/ou suivant l'axe de la colonne de direction. Dans le premier cas, l'arbre de direction portant le volant est monté rotatif dans un corps de colonne qui est susceptible de pivoter autour d'un axe horizontal. Dans le second cas, l'arbre de direction est réalisé en deux parties montées télescopiquement l'une par rapport à l'autre. Des dispositifs de réglage commandent les déplacements et maintiennent la colonne dans la position désirée.

Actuellement, ces dispositifs de réglage sont généralement commandés manuellement, ce qui permet de les réaliser de manière robuste et fiable. En effet, bien que les utilisateurs se montrent désireux de disposer de commandes de réglage asservies, et notamment de commandes de réglage électrifiées, la réalisation de telles commandes s'est révélée délicate en raison notamment des efforts auxquels est soumise la colonne de direction d'un véhicule.

A titre d'exemple d'un tel état de la technique, on pourra se reporter au document US-A-4.691.587 qui décrit une colonne de direction réglable comportant un arbre de direction monté rotatif dans un corps de colonne susceptible de pivoter autour d'un axe horizontal, entre deux flasques latéraux verticaux, et des moyens de réglage de la position de la colonne, lesdits moyens de réglage comportant des moyens de transmission en prise avec un pignon de sortie d'un motoréducteur de commande du pivotement de la colonne et portant un organe de suspension du corps de colonne.

La présente invention a pour but de répondre aux différentes exigences et contraintes mentionnées précédemment en fournissant une colonne de direction réglable qui soit à la fois commandée par des moteurs, et robuste et fiable.

Cette invention a en effet pour objet une colonne de direction réglable comportant un arbre de volant monté rotatif dans un corps de colonne susceptible de pivoter autour d'un axe horizontal, entre deux flasques latéraux, verticaux et des moyens de réglage de la position angulaire de la colonne, comportant des moyens de transmission en prise avec un pignon de sortie d'un motoréducteur de commande du pivotement de la colonne et portant un organe de suspension du corps de colonne, caractérisée en ce que les moyens de transmission comportent une crémaillère en prise avec le pignon et en ce que l'organe de suspension est guidé le long de rampes inclinées des flasques latéraux pour régler la position angulaire de la colonne.

Grâce à cette disposition le déplacement longitudinal de la crémaillère est transformé en un déplacement vertical du corps de colonne et par suite du volant de direction. En outre, l'organe de suspension du corps de colonne minimise les efforts transmis au pignon de sortie du motoréducteur.

Selon un mode de réalisation préféré l'organe de suspension comporte un coulisseau mobile le long du corps de colonne et au moins un bras de suspension à la crémaillère.

L'arbre de volant peut en outre être en deux parties dont l'une est supportée par un palier pivotant tandis que l'autre est solidaire du corps de colonne. Ce corps de colonne est alors monté coulissant par rapport au palier pivotant et est relié à l'extrémité d'une crémaillère en prise avec le pignon de sortie d'un moteur de commande du déplacement axial du volant de direction.

Des moyens de rattrapage de jeux de coulissement et de rotation sont prévus au droit de chacune des crémaillères.

La description ci-dessous d'un mode de réalisation donné à titre d'exemple non limitatif et représenté aux dessins annexés fera d'ailleurs ressortir les avantages et caractéristiques de l'invention. Sur ces dessins :

La figure 1 est une vue de dessus d'une colonne de direction réglable selon l'invention.

La figure 2 est une vue en coupe verticale suivant la ligne 2/2 de la Fig.1.

La figure 3 est une vue en coupe suivant la ligne 3/3 de la Fig.2, l'arbre de volant n'étant pas représenté.

La figure 4 montre le dispositif de rattrapage de jeux en coupe, à échelle agrandie, suivant la ligne 4/4 de la Fig.3.

La figure 5 est une vue en coupe suivant la ligne 5/5 de la Fig.2, l'arbre de volant n'étant pas représenté.

La figure 6 est une vue en coupe suivant la ligne 6/6 de la Fig.2 sans l'arbre de volant ni le palier pivotant.

La figure 7 est une vue en coupe, à plus grande échelle, du système de rattrapage de jeux de la colonne de direction représentée sur la Fig.2.

La figure 8 est une vue en bout du bloc palier pivotant de support de la colonne.

La figure 9 est une vue en coupe suivant la ligne 9/9 de la Fig.8.

La colonne de direction pour véhicule automobile représentée sur les dessins comporte un arbre de volant 1 qui est muni à sa partie supérieure de moyens de fixation d'un volant de direction (non représenté) et forme à sa partie inférieure une fourche de cardan 2 permettant son assemblage à un arbre de direction inférieur ou directement aux organes de transmission. L'arbre de volant 1 est monté rotatif, à proximité des moyens de fixation au volant, dans un tube enveloppe 4 qui prolonge la partie supérieure d'un corps de colonne 6 de section sensiblement en V renversé, aplati à son sommet.

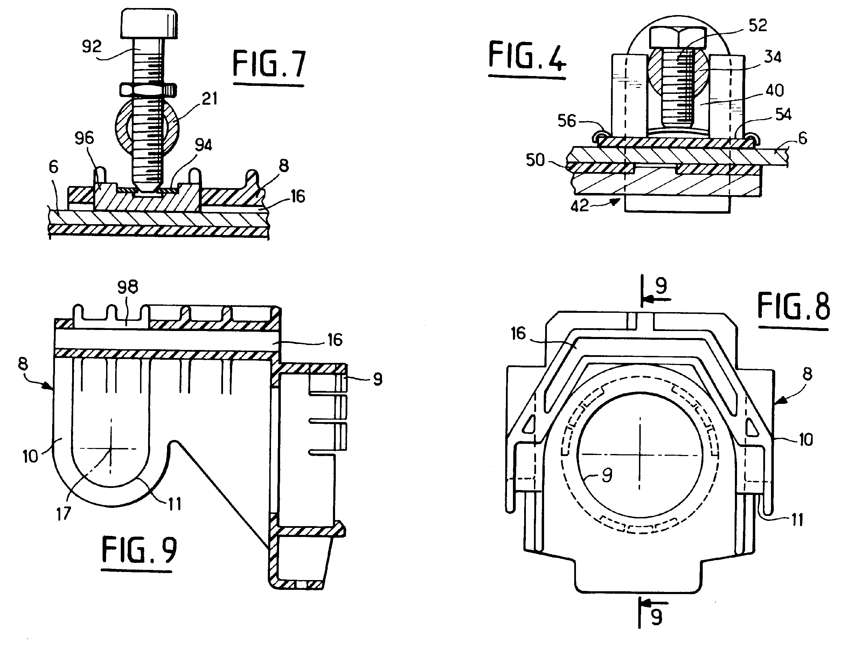

Au voisinage de la fourche de cardan 2 l'arbre de volant 1 tourne dans un bloc palier 8 comportant (Fig.8 et 9) un palier 9 prolongé longitudinalement par des pattes 10 qui sont réunies entre elles à leur partie supérieure et forment, à leur partie inférieure, des portées semicylindriques 11. Ces portées 11 sont en appui sur des portées de forme correspondante de deux flasques latéraux de support 12, verticaux et parallèles entre eux, qui sont réunis l'un à l'autre par un certain nombre d'entretoises 14.

Le bloc-palier pivotant 8 est percé, au-dessus des pattes 10, d'un passage longitudinal 16, ayant une section sensiblement en forme de V renversé et aplati, dans lequel est introduit et supporté le corps de colonne 6. L'ensemble du corps de colonne 6 et de l'axe de volant 1 peut ainsi pivoter autour de l'axe horizontal 17 passant par les centres des portées semi-cylindriques 11 en entraînant le volant de direction.

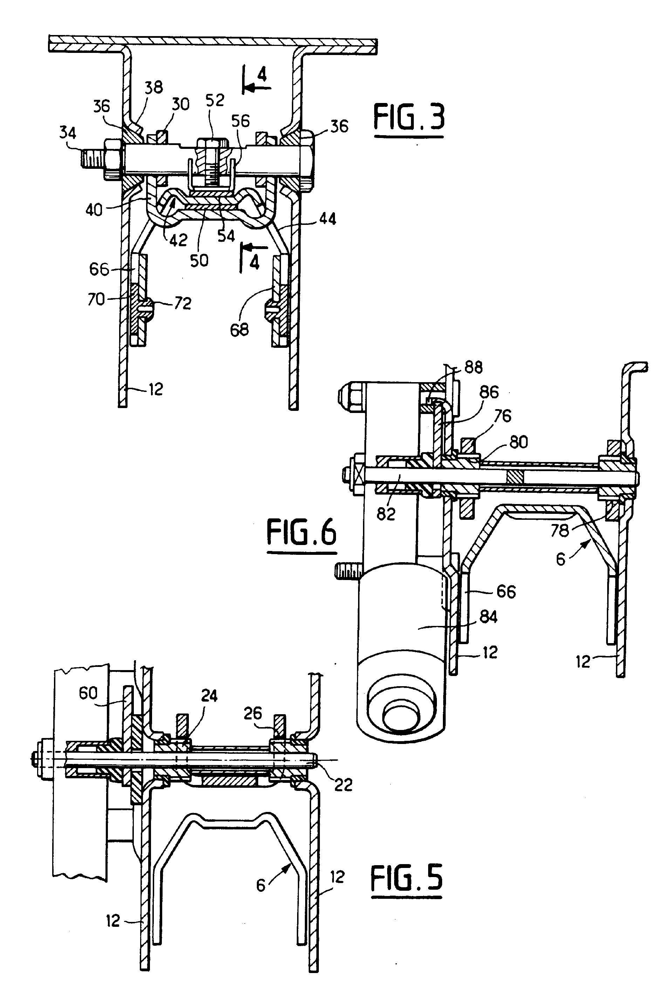

Un motoréducteur 20, qui comporte de préférence un moteur électrique, est monté à l'extérieur de l'ensemble formé par les deux flasques latéraux 12, sur l'un de ceux-ci, pour commander et régler ce déplacement du volant de direction. L'arbre 22 de sortie de ce moteur porte au moins un pignon 24, et de préférence deux pignons comme dans l'exemple de réalisation représenté. Chacun des pignons 24 est en prise avec une crémaillère 26 formée à la partie inférieure d'un bras 28 terminé par une chape 30. Les deux bras 28 sont de préférence reliés entre eux par une plaque inférieure 32 tandis que les deux chapes 30 sont traversées par un même axe 34 qui se prolonge au-delà de ces chapes et porte deux patins 36 mobiles le long de rampes inclinées 38 découpées dans les flasques latéraux 12 (Fig.3). Les rampes 38 étant formées par les bords recourbés vers l'intérieur de la découpe du flasque correspondant, chacun des patins 36 a initialement la forme d'une portion de cylindre dont la paroi latérale est déformée au contact des bords de la rampe.

L'axe 34 traverse également les deux branches latérales 40 d'un organe rigide 42 de suspension du corps de colonne 6. Cet organe 42 a une section sensiblement en U. Ces branches latérales 40 traversent des fentes longitudinales 44 du corps de colonne 6 et sa base est prolongée par une plaque 48 qui est en contact coulissant, de préférence avec interposition de patins de frottement 50, avec la face interne de ce corps 6.

De préférence une vis de pression 52 traverse l'axe 34 et agit, par l'intermédiaire d'un patin d'appui 54, sur le corps de colonne 6 et sur l'organe coulissant de suspension 42, 48 afin de rattraper les jeux. Un ressort ou une plaquette élastique 56 peut également être monté entre la vis 52 et le patin d'appui 54 pour compenser les usures éventuelles.

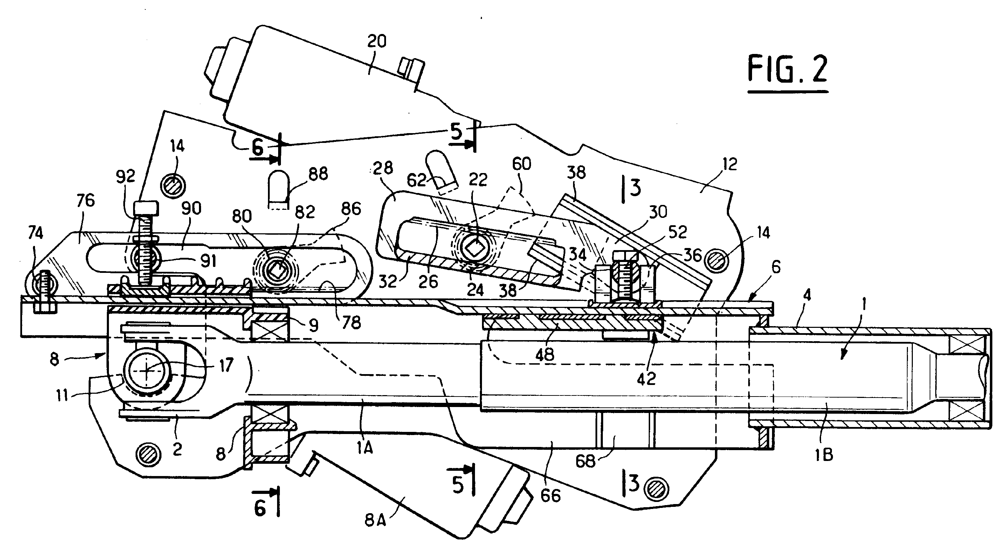

Lors d'un réglage en hauteur de la position du volant de direction, le motoréducteur 20 en faisant tourner l'arbre 22 et le pignon 24 provoque un déplacement de la crémaillère 26 et par suite de l'axe 34. Les patins 36 coulissent dans la rampe 38 en entraînant le coulisseau de suspension 42. La plaque 48 glisse le long de la surface interne du corps de colonne 6 mais les branches 40 qui sont rigides et ont une longueur constante font pivoter ce corps de colonne et le bloc palier 8 en même temps que l'axe de volant 1 sur les portées des flasques latéraux. Par exemple un déplacement vers la droite de la Fig.2 de l'axe 34 et des patins 36 sur les rampes 38 repousse le corps de colonne 6 vers le bas et par suite abaisse le volant de direction.

De préférence un doigt 60 est monté sur l'arbre 22 de manière à être solidaire de ce dernier en rotation et l'un des flasques latéraux 12 comporte une butée 62, découpée dans sa paroi, qui limite le déplacement du doigt 60 et détermine la course du pignon 24 sur la crémaillère 26. Tout risque de détérioration des extrémités de la crémaillère par le pignon 24 est ainsi évité. Par ailleurs le coulisseau de suspension 42, 48 assure une reprise des efforts radiaux du corps de colonne 6, 4 sur les flasques latéraux 12 et minimise les efforts supportés par les pignons 24.

Pour faciliter le déplacement du corps de colonne 6 entre des flasques latéraux 12, l'encombrement transversal hors tout de ce corps de colonne est légèrement inférieur à la distance qui sépare les deux flasques latéraux 12. En outre, chacun des flancs verticaux 66 de ce corps de colonne 6 comporte une partie 68 repoussée vers l'intérieur qui délimite un logement pour un patin élastique de frottement sous tension 70 muni en son centre d'un pion 72 de verrouillage sur le flanc 68. De préférenre la surface extérieure de chacun des patins de frottement 70 a initialement une forme sphérique qui facilite un glissement sans jeu.

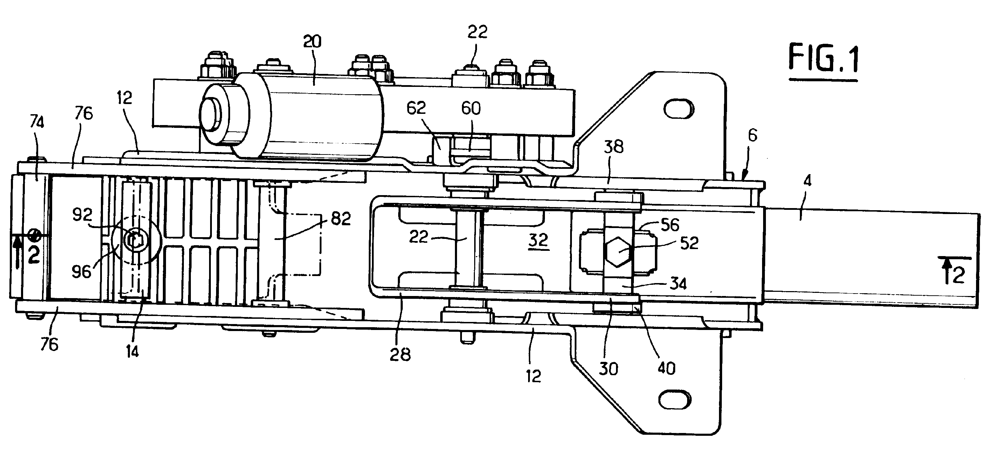

Bien entendu la colonne de direction selon l'invention peut être munie également de moyens de réglage de la position axiale du volant de direction. Dans ce cas, comme représenté, l'arbre de volant 1 comporte deux parties 1A et 1B montées télescopiquement l'une par rapport à l'autre. La partie inférieure 1A forme la fourche de cardan 2 et est montée pivotante dans le bloc palier 8. La partie supérieure 1B porte le volant de direction et est montée rotative dans le tube enveloppe 4 du corps de colonne 6. Ce dernier coulisse dans le passage 16 du bloc palier 8, se prolonge à l'extérieur de ce bloc palier et porte à son extrémité un axe 74 qui est monté oscillant dans au moins un support de crémaillère 76 et de préférence dans deux supports 76 montés à chacune de ses extrémités (Fig.1).

La crémaillère 78 portée par chacun des supports 76 est en prise avec un pignon 80 solidaire de l'arbre 82 de sortie d'un motoréducteur 84. De préférence le motoréducteur 84 comporte un moteur électrique et il est monté sur le même flasque latéral 12 que le motoréducteur 20 mais en sens inverse. L'arbre 82 porte également un doigt 86 monté sur lui de manière à en être solidaire en rotation. De la même manière que le doigt 60, le doigt 86 pivote ainsi entre deux positions extrêmes dans lesquelles il est en contact avec l'une des deux faces opposées d'une butée 88 découpée dans la paroi du flasque latéral 12.

Le support 76 de chacune des crémaillères 78 délimite une lumière interne 90 dans laquelle passe une entretoise pivotante 91 reliant les deux flasques latéraux 12. Dans sa partie médiane cette entretoise 91 est traversée verticalement par une vis de pression 92 (Fig.7) qui appuie par l'intermédiaire d'un ressort 94 sur un patin d'appui 96 qui traverse un orifice 98 de la partie supérieure du bloc palier 8, fait saillie dans le passage 16 et entre en contact avec le corps de colonne 6 qu'il tend à pousser contre le fond du passage 16 en assurant ainsi le rattrapage du jeu.

Lors de la mise en route du motoréducteur 84, la rotation de l'arbre de sortie 82 entraîne un pivotement du doigt 86 et une rotation du pignon 80 qui provoque un déplacement en translation de la crémaillère 78 et de son support 76. L'axe 74 est ainsi déplacé, par exemple vers la gauche en considérant la Fig.2, et entraîne le corps de colonne 6 qui est solidaire en translation de la partie supérieure 1B de l'axe de volant. Le volant de direction se rapproche progressivement de la fourche de cardan 2 tandis que le corps de colonne 6 glisse sur le coulisseau 48 dont la position reste inchangée.Ce déplacement peut se continuer jusqu'au moment où le doigt 86 entre en contact avec la face de gauche de la butée 88, mais il peut être arrété en toute position intermédiaire grâce à une coupure de l'alimentation du moteur 84 au moment où le volant de direction atteind la position désirée.

Bien entendu une rotation en sens inverse de l'arbre 82 de sortie du moteur 84, et par suite du pignon 80 sur la crémaillère, provoque un coulissement vers la droite du corps de colonne 6 et de la partie supérieure 1B de l'arbre de volant, qui se rapproche du conducteur, tout en faisant pivoter le doigt 86 en direction de la face opposée de la butée 88.

Au cours du réglage axial les moyens de réglage en hauteur ne subissent aucune modification et le doigt 60 reste dans la même position, par exemple en appui contre la butée 62. Les efforts dus au coulissement du corps de colonne dans le coulisseau 48 sont absorbés par les patins d'appui 50, 54 et les vis de pression protègent ainsi la crémaillère et le pignon.

Par contre dès que le motoréducteur 20 est excité, la rotation du pignon 24 entraîne la crémaillère 26 et fait glisser progressivement l'axe 34 et le coulisseau 42, 48 entre les rampes 38. La partie supérieure du corps de colonne 6 est déplacée dans le plan vertical, ce qui provoque simultanément le pivotement de l'arbre de volant 1 et du bloc palier 8 autour de l'axe 17 dans les portées des flasques latéraux 12 et en outre fait pivoter l'axe 74 et les supports de crémaillères 76. Ces supports étant en appui sur les pignons 80 à la fois par la denture de la crémaillère 78 et par le bord supérieur en regard de la lumière 90, et étant traversés par l'entretoise pivotante 91, pivotent légèrement. Leur angle de pivotement est faible mais assez grand pour permettre le réglage de la position du volant. En outre la vis de pression 92 rattrape les jeux entre le corps de colonne 6 et le bloc palier 8.

Selon une variante de réalisation, les réglages en hauteur et axial du volant sont commandés simultanément par le motoréducteur 20. Dans ce cas, le corps 6 de colonne comportant un arbre de volant télescopique 1A, 1B est fixé sur l'organe de suspension 42 et coulisse dans le bloc palier 8 en étant appuyé dans le fond du passage 16 par la vis de pression 92. Le déplacement de la crémaillère 26 fait pivoter le corps de colonne 6 autour de l'axe 17 mais en même temps le déplace longitudinalement dans le passage 16 de sorte que le volant parcourt une trajectoire combinant ces deux mouvements.

On obtient ainsi une colonne direction qui permet d'adapter facilement la position d'un volant de direction à la morphologie du conducteur et présente toutes les garanties de fiabilité exigées d'une colonne de direction.

## Revendications

1. Colonne de direction réglable comportant un arbre de volant (1) monté rotatif dans un corps de colonne (4, 6) susceptible de pivoter autour d'un axe horizontal, entre deux flasques latéraux, verticaux (12) et des moyens de réglage de la position angulaire de la colonne, comportant des moyens de transmission en prise avec un pignon (24) de sortie d'un motoréducteur (20) de commande du pivotement de la colonne et portant un organe (42) de suspension du corps de colonne, caractérisée en ce que les moyens de transmission comportent une crémaillère en prise avec le pignon (24) et en ce que l'organe de suspension (42) est guidé le long de rampes inclinées des flasques latéraux pour régler la position angulaire de la colonne.

2. Colonne de direction suivant la revendication 1, caractérisée en ce que l'organe de suspension du corps de colonne (6) comporte un coulisseau (48) mobile le long de ce corps (6) et au moins un bras (40) de suspension à la crémaillère.

3. Colonne de direction suivant l'une des revendications 1 et 2, caractérisée en ce que la crémaillère (26) est reliée par un même axe (34) à deux patins (36) coulissant le long de rampes (38) des flasques latéraux (12) et à l'organe (42) de suspension du corps de colonne.

4. Colonne de direction suivant l'une des revendications 2 et 3, caractérisée en ce que l'organe de suspension comporte deux bras (40) qui traversent chacun une fente longitudinale (44) du corps de colonne (6) et une plaque (48) en contact coulissant avec la face interne du corps de colonne.

5. Colonne de direction suivant l'une des revendications précédentes, caractérisée en ce que le corps de colonne (6) est logé dans un passage longitudinal (16) d'un bloc palier (8) monté pivotant sur les flasques latéraux (12).

6. Colonne de direction suivant l'une des revendications précédentes, caractérisée en ce qu'une vis de pression et de rattrapage de jeux (52) traverse l'axe (34) d'articulation de la crémaillère (26) et agit sur l'organe de suspension (42) et sur le corps de colonne (6).

7. Colonne de direction suivant la revendication 6, caractérisée en ce qu'une plaquette élastique de compensation d'usure (56) est montée entre la vis de réglage de pression (52) et le corps de colonne (6).

8. Colonne de direction suivant l'une des revendications précédentes, caractérisée en ce que l'arbre de volant (1) étant formé par deux parties montées télescopiquement l'une par rapport à l'autre, l'extrémité du corps de colonne éloignée du volant est reliée (en 74) à au moins une crémaillère (78) en prise avec le pignon (82) de sortie d'un motoréducteur (84) de commande de la position axiale du volant de direction.

9. Colonne de direction suivant la revendication 8, caractérisée en ce que dans le, ou les, support de crémaillère (76) passe une entretoise pivotante (91) montée entre les deux flasques latéraux (12) qui est traversée par une vis de pression (92) agissant sur le corps de colonne (6).

10. Colonne de direction suivant la revendication 9, caractérisée en ce que la vis de pression (92) serre un patin d'appui (96) logé dans un orifice (98) du bloc palier (8) et en contact avec le corps de colonne (6).

11. Colonne de direction suivant l'une des revendications précédentes, caractérisée en ce que le corps de colonne (6) a au droit des moyens de réglage une section en V renversé et aplati à son sommet.

12. Colonne de direction suivant l'une des revendications précédentes, caractérisée en ce qu'elle comporte des moyens (60, 62- 86, 88) de limitation de ses déplacements de réglage.

## Patentansprüche

1. Verstellbare Lenksäule mit einer Lenkradwelle (1), die zwischen zwei vertikalen Seitenflanschen (12) drehbar in einem um eine horizontale Achse schwenkbaren Säulenkörper (4, 6) angebracht ist, und einer Einrichtung zum Verstellen der Winkelposition der Säule, die eine mit einem Abtriebsritzel (24) eines Getriebemotors (20) zur Steuerung der Schwenkens der Säule kämmende Getriebeeinrichtung und ein Säulenkörperaufhängungsorgan (42) aufweist, dadurch gekennzeichnet, daß die Getriebeeinrichtung eine mit dem Ritzel (24) kämmende Zahnstange aufweist und daß das Aufhängungsorgan (42) zur Verstellung der Winkelposition der Säule entlang schräger Rampen der Seitenflansche geführt ist.

2. Lenksäule nach Anspruch 1, dadurch gekennzeichnet, daß das Aufhängungsorgan des Säulenkörpers (6) einen in Längsrichtung des Körpers (6) bewegbaren Schlitten (48) und wenigstens ein Zahnstangenaufhängungsarm (40) aufweist.

3. Lenksäule nach einem der Ansprüche 1 und 2, dadurch gekennzeichnet, daß die Zahnstange (26) durch dieselbe Achse (34) mit zwei entlang den Rampen (38) der Seitenflansche (12) gleitend verschiebbaren Gleitstücken (36) und mit dem Säulenkörperaufhängungsorgan (42) verbunden ist.

4. Lenksäule nach einem der Ansprüche 2 und 3, dadurch gekennzeichnet, daß das Kompensationsorgan zwei Arme (40) aufweist, die sich jeweils durch einen Längsschlitz (44) des Säulenkörpers (6) erstrecken, und eine in Gleitkontakt mit der Innenfläche des Säulenkörpers befindliche Platte (48) aufweist.

5. Lenksäule nach einem der vorhergehenden Ansprüche, dadurch gekennzeichnet, daß der Säulenkörper (6) in einem längsverlaufenden Durchgang (16) eines Lagerblocks (8) aufgenommen ist, der schwenkbar an den Seitenflanschen (12) angebracht ist.

6. Lenksäule nach einem der vorhergehenden Ansprüche, dadurch gekennzeichnet, daß sich eine Druck- und Nachstellschraube (52) durch die Schwenkachse (34) der Zahnstange (26) erstreckt und auf das Aufhängungsorgan (42) und den Säulenkörper (6) wirkt.

7. Lenksäule nach Anspruch 6, dadurch gekennzeichnet, daß eine elastische Verschleißkompensationsplatte (56) zwischen der Druckeinstellschraube (52) und dem Säulenkörper (6) vorgesehen ist.

8. Lenksäule nach einem der vorhergehenden Ansprüche, dadurch gekennzeichnet, daß, da die Lenkradwelle (1) aus zwei in bezug zueinander teleskopisch montierten Teilen gebildet ist, das dem Lenkrad abgewandte Ende des Säulenkörpers (bei 74) mit mindestens einer Zahnstange (78) verbunden ist, die mit dem Abtriebsritzel (82) eines Getriebemotors (84) zum Steuern der axialen Position des Lenkrades verbunden ist.

9. Lenksäule nach Anspruch 8, dadurch gekennzeichnet, daß sich zwischen die Stütze oder Stützen (76) der Zahnstange ein zwischen den beiden Seitenflanschen (12) angebrachtes Schwenkstück (91) erstreckt, das von einer auf den Säulenkörper (6) wirkenden Druckschraube (92) durchsetzt ist.

10. Lenksäule nach Anspruch 9, dadurch gekennzeichnet, daß die Druckschraube (92) eine Anlageplatte (96) festspannt, die in einer öffnung (98) des Lagerblocks (8) angeordnet und in Kontakt mit dem Säulenkörper (6) ist.

11. Lenksäule nach einem der vorhergehenden Ansprüche, dadurch gekennzeichnet, daß der Querschnitt des Säulenkörpers (6) bei der Verstelleinrichtung die Form eines umgekehrten V mit abgeflachter Spitze aufweist.

12. Lenksäule nach einem der vorhergehenden Ansprüche, dadurch gekennzeichnet, daß sie Einrichtungen (60, 62 - 86, 88) zum Begrenzen ihrer Verstellwege aufweist.

## Claims

1. Adjustable steering column comprising a steering-wheel shaft (1) rotatably mounted in a column body (4, 6) capable of pivoting about a horizontal axis between two vertical lateral flanges (12), and means for adjusting the angular position of the column, having transmission means in mesh with an output pinion (24) of a geared motor (20) for controlling the pivoting of the column and carrying a member (42) for suspending the column body (6), characterized in that the transmission means comprise a rack in mesh with the pinion (24) and in that the suspension member (42) is guided along inclined ramps of lateral flanges in order to regulate the angular position of the column.

2. Steering column according to Claim 1, characterized in that the suspension member for the column body (6) comprises a slide (48) which is movable along this body (6) and at least one arm (40) for suspension on the rack.

3. Steering column according to either of Claims 1 and 2, characterized in that the rack (26) is connected by the same pin (34) to two shoes (36) sliding along ramps (38) of the lateral flanges (12) and to the member (42) for suspending the column body.

4. Steering column according to either of Claims 2 and 3, characterized in that the suspension member comprises two arms (40), each of which passes through a longitudinal aperture (44) of the column body (6), and a plate (48) in sliding contact with the internal face of the column body.

5. Steering column according to one of the preceding claims, characterized in that the column body (6) is accommodated in a longitudinal passage (16) of a bearing block (8) mounted so as to pivot on the lateral flanges (12).

6. Steering column according to one of the preceding claims, characterized in that a screw for exerting pressure and taking up play (52) passes through the articulation pin (34) of the rack (26) and acts on the suspension member (42) and on the column body (6).

7. Steering column according to Claim 6, characterized in that a resilient plate (56) for compensating wear is mounted between the pressure-adjusting screw (52) and the column body (6).

8. Steering column according to one of the preceding claims, characterised in that, the steering-wheel shaft (1) being formed by two parts mounted telescopically relative to one another, the end of the column body which is remote from the steering wheel is connected (at 74) to at least one rack (78) in mesh with the output pinion (82) of a geared motor (84) for controlling the axial position of the steering wheel.

9. Steering column according to Claim 8, characterised in that passing through the rack support(s) (76) is a pivoting spacer (91) mounted between the two lateral flanges (12), through which spacer there passes a pressure screw (92) acting on the column body (6).

10. Steering column according to Claim 9, characterised in that the pressure screw (92) clamps a bearing shoe (96) accommodated in an orifice (98) of the bearing block (8) and in contact with the column body (6).

11. Steering column according to one of the preceding claims, characterised in that, at right angles to the adjustment means, the column body (6) has the cross-section of a V inverted and flattened at its tip.

12. Steering column according to one of the preceding claims, characterised in that it comprises means (60, 62-86, 88) for limiting its adjustment displacements.
